# EUROPEAN PATENT SPECIFICATION

(11) **EP 3 906 988 B1**
(45) Date of publication and mention of the grant of the patent: **16.07.2025**
(21) Application number: 20173615.4
(22) Date of filing: 08.05.2020
(51) Int. Cl.: B01D 35/02, B01D 35/28, B01D 46/00, B01D 46/10, B01D 46/52

(54) **FILTER UNIT AND FILTERING METHOD**
FILTEREINHEIT UND FILTERVERFAHREN
UNITÉ DE FILTRE ET PROCÉDÉ DE FILTRAGE

(43) Date of publication of application: 10.11.2021
(73) Proprietor: Siemens Energy Global GmbH & Co. KG, 81739 München (DE)
(72) Inventor: LARSSON, Isaac, 612 72 Ljusfallshammar (SE); OLSEN, Rickard, 603 63 Norrköping (SE); RENVALL, Jani, 00380 Helsinki (FI); RYTKÖNEN, Iikka, 33710 Tampere (FI); TERVO, Oula Tuomas, 33680 Tampere (FI)

(56) References cited:
- WO-A1-2014/174323
- KR-A- 20130 066 018
- US-A1- 2011 265 438
- US-A1- 2017 080 361
- US-A1- 2017 204 746
- RÖCHLING INDUSTRIAL: "Fertigteile aus Kunststoff", 30 September 2018 (2018-09-30), Retrieved from the Internet <URL:https://www.roechling.com/fileadmin/downloads/Roechling_Industrial/Brochures/DE/Fertigteile/Fertigteile-aus-Kunststoff-DE.pdf> [retrieved on 20220704]
- RÖCHLING INDUSTRIAL: "Röchling bietet 3D-Druck an", 1 November 2013 (2013-11-01), Retrieved from the Internet <URL:https://www.roechling.com/de/newsroom/detail/roechling-bietet-3d-druck-an> [retrieved on 20230329]

## Description

The present invention refers to a filter unit to be used in a continuous flow engine providing improved properties and new possibilities. Furthermore, the present invention refers to a kit containing said filter unit and the counterpart to be attached to a continuous flow engine. Additionally, the present invention refers to a continuous flow engine containing such filter unit, kit or counterpart. Furthermore, the present invention refers to a method utilizing such filter unit or kit. Additionally, the present invention refers to a use of the inventive filter unit or kit.

Continuous flow engines are highly developed and complicated devices providing many possibilities. However, the requirements associated with such devices are also very significant. For example, the fluid streams inside such continuous flow engines are typically to be closely monitored to avoid damages of the devices. For example, the fuel utilized in such continuous flow engine like a gas turbine is to be office secured quality to avoid that even very small particles are transmitted by the fuel through valves like quick closing valves and/or into the burner. For example, such quick closing valves need to be protected against such particles to ensure their function. Such burner typically provides a complicated net of small channels or openings being easily clogged by such particles. Even if such structural elements are not completely clogged it influences the fluid stream through said channels easily resulting in deviations of the theoretical behavior that might influence the overall performance or even security of such continuous flow engine.

Also, continuous flow engines not utilizing such filtered fluid as fuel require corresponding filtering processes. For example, compressors require to decrease corresponding particles from the compressed medium to avoid that such particles, for example, hit the surfaces of the compressor blades possibly resulting in damages. Additionally, corresponding particles might deposit on the side of the compressor channel until the compressor blades come into contact based on, for example, additional depositions or an elongation of the corresponding blades based on the centrifugal forces and heat. In case of such contact this might result in sparks resulting in direct or indirect damages the compressor. Even in case of no damages this might trigger some security mechanism of a modern compressor to avoid damages and result in an emergency shutdown not required.

For example, US2017204746 A1 refers to a strainer body strainer body has a conical or bullet-like shape and includes a tip portion, a midsection, and a base portion.

For example, WO2014174323 A1 refers to a filter and to a method of manufacturing the filter.

For example, Röchling Industrial: "Fertigteile aus Kunststoff", 30 September 2018 refers to components made from plastic.

For example, Röchling Industrial: "Röchling bietet 3D-Druck an", Röchling Gruppe, Newsroom, 1 November 2013 refers to component made by 3D printing.

Thus, there is a need to provide the reliable filtering system to ensure a secure and safe operation of corresponding devices. However, implementing such filtering system is always a balance of, for example, costs, requirements like the space requirements, demands and assessments with regard to the intended use. Therefore, there is a constant need to improve the flexibility of such filtering systems still fulfilling the requirements especially with regard to the safety and further improving the characteristics of such system. Especially, the demand to provide the highly reliable yet flexible integrated filter system to be easily implemented into the final stage of the corresponding fluid streams close to the core part of the continuous flow engine is significant.

This and further problems are solved by the methods as disclosed hereafter and in the claims. Further beneficial embodiments are disclosed in the dependent claims and the further description and figures. These benefits can be used to adapt the corresponding solution to specific needs or to solve additional problems.

The invention is described in the attached claim set.

Furthermore, the present application discloses a filter unit for a continuous flow engine,
wherein the filter unit is adapted to filter a fluid stream, preferably a gas stream,
wherein the filter unit provides a strainer part providing two strainer surfaces,
wherein at least one of the two strainer surfaces is not planar, wherein the filter unit has been manufactured using additive manufacturing, wherein the filter unit is adapted to filter a fluid stream providing a flow direction, wherein the strainer part provides an upstream surface and a downstream surface based on the flow direction, wherein the at least one reinforcement structure contains at least one reinforcement rib, preferably wherein the at least one of the two strainer surfaces has a complex three dimensional shape. Surprisingly, it was noted that corresponding filter units providing such complex three dimensional shape can be easily provided utilizing methods like especially binder jetting. Herein, it was noted that corresponding units can be manufactured small in size and specifically adapted to the intended application at low cost. The small size is especially important as it allows to place it in the vicinity of the continuous flow engine providing extreme space requirements to anything placed there. Furthermore, the filtering effect possible with the intended design allows to provide a significant filtering effect increasing the overall security of such filtering mechanism and using it as effective part of such filtering mechanism not only as last stage filter that under normal conditions no particle should even reach. Using the inventive filter unit renders it possible to easily replace the corresponding filter unit also very frequently without any significant impact on the overall economic benefit of the continuous flow engine. Especially, utilizing some flexible manufacturing methods selected from 3D printing methods like binder jetting are very beneficial, as they allow to further optimize the interior structure of the filter unit providing the chance to further decrease the size rendering the associated costs essentially insignificant.

Taking into account, for example, the expected change in the energy sector also putting high demands on topics like the fuel supply the need to increase the flexibility with regard to the possibilities of the filtering process while ensuring a safe operation is expected to become highly relevant topic in the near future. For example, possible changes of the fuel composition and utilization of fuel originating from renewable sources. Such change provides the danger that corresponding filters utilized to this point and adapted to filter high quality fuel with constant quality become a limiting factor for future possibilities. Similar problems are also expected for comparable topics of different continuous flow engines. Exemplarily it is also referred to the oil utilized as lubricant in the compressor. The results obtained with the inventive filter units provided evidence that corresponding needs can easily be addressed utilizing the present invention increasing the possibilities today and ensuring utilization of existing continuous flow engines in the future with little to no effort.

Furthermore, the present application discloses a kit containing a filter unit as disclosed and a counterpart adapted receive the filter unit, wherein the counterpart is adapted to be used as part of the continuous flow engine. Typically, it is preferred that such counterpart is adapted to be only temporarily or even not completely be disconnected while exchanging the filter unit. Corresponding kits are very beneficial to provide the possibility to upgrade an existing system to utilize the inventive filter units. For example, it becomes possible to provide a modular system allowing to easily exchange the filter unit enabling to utilize such filtering system to not only collect traces of contamination but significant amounts of, for example, particles contained in the fluid. Taking the low amount of space available in typical applications like especially continuous flow engines utilized in power plants the possibility to change a last stage filter utilized only as last means of security against contamination inside the continuous flow engine to a filter unit collecting a significant amount of contamination is beneficial, but a significant point to be considered. This easily results in the drastic change of the number of replacements to be expected requiring the available means to replace such filter to be fitting the new needs.

AFurthermore, this application discloses a continuous flow engine containing an filter unit as disclosed or a kit as disclosed or a counterpart as disclosed.

Furthermore, the present application discloses a method of upgrading or servicing a continuous flow engine, wherein the method includes introducing an inventive filter unit or an inventive kit.

Furthermore, the present invention discloses a use of an inventive filter unit or an inventive to filter a fluid stream of the continuous flow engine.

To simplify understanding of the present invention it is referred to the detailed description hereafter and the figures attached as well as their description. Herein, the figures are to be understood being not limiting the scope of the present invention, but disclosing preferred embodiments explaining the invention further.
Fig. 1 shows a schematic side view of an inventive filter unit adapted to be utilized in a continuous flow engine.
Fig. 2 shows a schematic side view of a non-inventive filter utilized in a continuous flow engine.
Fig. 3 shows a schematic side view of an alternative strainer part to be utilized in an inventive filter unit.
Fig. 4 shows a schematic side view of the upstream surface of the strainer part of the inventive filter unit as shown in figure 1.
Fig. 5 shows a schematic cross section along the flow direction through the central point and the axis as shown in figure 4 of the inventive filter unit as shown in figure 1.
Fig. 6 shows a schematic side view of an inventive kit containing the filter unit according to figure 1 and a counterpart.
Fig. 7 shows a schematic cross section along the flow direction through the central point and the axis as shown in figure 4 of the inventive kit as shown in figure 6, wherein the kit is utilized as part of a fuel supply of a continuous flow engine.

To simplify understanding of the present invention it is referred to the detailed description hereafter and the figures attached as well as their description. Herein, the figures are to be understood being not limiting the scope of the present invention, but disclosing preferred embodiments explaining the invention further.

The present application discloses a filter unit as described above. Such filter unit is adapted to be placed in the fluid stream streaming through said strainer part unit. Herein, the fluid stream enters the strainer part through one of the strainer surfaces being the upstream surface and exits the strainer part through the other strainer surface being the downstream surface. The term "planar" as used in this context refers to a surface of the strainer surface being essentially plane, wherein the openings on the surface to enable the fluid to stream through the strainer part are disregarded. In case the strainer surface provides reinforcement structures being part of the surface and extending out of it they are disregarded when evaluating the shape of the corresponding surface.

For typical applications it is preferred that both strainer surfaces are not planar. However, it is not required, for example, that the downstream surface is identical to the upstream surface and that the strainer part provides an essential homogeneous thickness. According to further embodiments it is even preferred that the two strainer surfaces provide different shapes. It was noted that it is typically beneficial to utilize the possibilities of additive manufacturing methods like especially 3D printing to optimize the characteristics of the corresponding strainer part. For example, it is highly beneficial to include ribs and thicker areas of the strainer part to increase the overall stability of the structure. Herein, it was, for example, noted that such ribs reinforcing the overall structure are beneficially placed on the upstream side while it is typically not required to include corresponding recesses on the downstream side to provide exactly the same shape. In fact, it was noted that corresponding reinforcement ribs extending from the upstream surface also extend out of the downstream surface.

For typical application cases it is beneficial to use the inventive filter unit as last stage filter. According to further embodiments it is preferred that the filter unit is adapted to filter a fluid utilized in the continuous flow engine, wherein the filter unit is adapted to be the last filter before the fluid is utilized in the continuous flow engine. For example, the filter unit can be used in a fuel supply of the continuous flow engine before said fuel is burned in the burner of a gas turbine or a boiler of a steam turbine. Or the filter unit can be used in an oil supply used as lubricant and/or cooling fluid in a compressor, wherein the filter unit is placed right before using such oil. Based on the high reliability and possibility to easily replace the filter unit the placement even at such position becomes very beneficial.

For further typical application cases the filter unit is utilized upstream of a safety valve and/or a quick closing valve. According to further embodiments it is preferred that the counterpart is adapted to be used upstream in front of a safety valve and/or a quick closing valve. Herein, such safety valve may be a quick closing valve. Although, this is beneficial it is not required that the safety valve is a quick closing valve or that a quick closing valve is only utilized for safety reasons. For example, a quick closing valve can also be beneficially utilized for typical control applications. It was noted that utilizing the inventive filter unit for such applications is very beneficial. Surprisingly, it allows to increase the reliability of corresponding valves based on the very reliable filter function and stability of the filter unit. Additionally, the improved characteristics obtained for the inventive filter unit enables to replace an existing filter system in front of such filter by the inventive filter unit, for example, saving space or simplifying the maintenance.

The inventive filter unit can be utilized to filter a fluid stream being a gas stream or a liquid stream. A preferred application case of the filter unit is to filter a gas fluid. According to further embodiments it is preferred that the filter unit is a gas filter unit. Utilizing the filter unit for such purpose is very beneficial for typical applications as the optimized form of the strainer part allows to provide a reliable filtering of the gas filter without a significant pressure drop.

Especially for an application like in gas turbines and an utilization near the intended use of the fluid it was noted that a specific maximum size of the openings should be maintained. According to further embodiments it is preferred that the filter unit is adapted to filter a fluid stream providing a flow direction, wherein the strainer part provides an upstream surface based on the flow direction, wherein the upstream surface provides openings, wherein at least 99%, even more preferred at least 99.9%, of the openings on the upstream surface of the strainer part provide a size of at most 80µm, more preferred at most 74µm, even more preferred at most 69um, measured perpendicular to the upper surface. Although, the filtering effect is essentially limited by the overall structure of the strainer part it was noted that the introduction of such size limit of the openings provides significant benefits. Even in case significant larger particles are to be eliminated and in case particles with a particle size of, for example, 100µm could be allowed to pass it was noted that restricting the size accordingly resulted in a unexpected reduction of clogging of the strainer part. In case there is no defined upstream surface as the filter unit, for example, is adapted to be placed in any direction by providing a strainer part being mirror symmetric based on a plane perpendicular to the flow direction, the terms "upstream surface" and "downstream surface" as used herein refer to a arbitrarily selected side. In case the strainer part does not provide such mirror symmetry it is typically preferred that the term "upstream surface" in absence of other indications refers to the strainer surface providing the bigger surface area.

For a further improved filtering process it is further preferred that such size limit is even fulfilled for two dimensions of the openings. According to further embodiments it is preferred that the filter unit is adapted to filter a fluid stream providing a flow direction, wherein the strainer part provides an upstream surface based on the flow direction, wherein the upstream surface provides openings, wherein at least 99%, even more preferred at least 99.9%, of the openings on the upstream surface of the strainer part provide a size of at most 80um, more preferred at most 74µm, even more preferred at most 69µm, in at least two dimensions being perpendicular to each other and perpendicular to the upstream surface. Surprisingly, it was noted that the clogging noted during use seems to be further reduced utilizing such design.

It is possible to provide complex structures with thicknesses as desired using especially 3D printing methods like binder jetting. However, it is typically preferred to limit the thickness to certain upper limit. According to further embodiments it is preferred that the filter unit is adapted to filter a fluid stream providing a flow direction,
wherein the strainer part provides an upstream surface and a downstream surface based on the flow direction,
wherein the strainer part provides an average inner diameter, wherein at least 90%, more preferred at least 95%, of the strainer part based on the area of the upstream surface provides a maximum thickness of at most 10%, more preferred at most 8%, even more preferred at most 7%, of the average inner diameter. Typically, it is preferred that 95%, more preferred even 99%, of the strainer part provides such thickness. It was noted that corresponding filter units provide the required stability and reliability while significantly reducing the weight and manufacturing time associated wherein. It was even noted that corresponding strainer parts surprisingly seem to provide an improved stability taking into account bigger particles like parts from upstream located filter parts that might have broken off. The term "flow direction" as used herein refers to the generic direction of the flow of the fluid stream wherein local inconsistencies resulting from, for example, the strainer part of the filter unit. Herein, the flow direction can, for example, be identified by the flow of the fluid stream before and after the strainer part and extrapolating an overall flow direction through the strainer part herewith.

According to further embodiments it is preferred that the filter unit is adapted to filter a fluid stream providing a flow direction,
wherein the strainer part provides an upstream surface and a downstream surface based on the flow direction,
wherein the strainer part provides an average inner diameter, wherein at least 90%, more preferred at least 95%, of the strainer part based on the area of the upstream surface provides a maximum thickness of at most 10mm, more preferred at most 6mm, even more preferred at most 4mm, , of the strainer part provides such thickness. It was noted that such thickness typically provides suitable filter units for application cases like filtering gases.

By adapting the geometry of the channels extending through the strainer part it becomes possible to provide a defined flow through the strainer part even in case of a significantly inhomogeneous thickness of the strainer part. However, it is typically beneficial to provide a more uniform thickness of the strainer part. According to further embodiments it is preferred that the filter unit is adapted to filter a fluid stream providing a flow direction,
wherein the two strainer surfaces are an upstream strainer surface and a downstream strainer surface,
wherein at least 90% of the upstream surface provide a distance to the downstream surface differing at most 30%, more preferred at most 20%, even more preferred at most 15%, from the average distance between the upstream surface and the downstream surface measured along the flow direction. The average distance between the upstream surface and the downstream surface is calculated as arithmetic mean. For such calculation of the surface of the openings adapted to allow the fluid to flow through the strainer part are considered being part of the surface.

A generic design feature to be beneficially included into typical application cases is adapting the shape by introducing indentations on at least one strainer surface. According to further embodiments it is preferred that the filter unit is adapted to filter a fluid stream providing a flow direction, wherein the strainer part provides an upstream surface based on the flow direction,
wherein the upstream surface provides at least one indentation in the flow direction. It was noted that the inventive design can be easily realized for a new application case by starting from and generic geometric structure and introducing indentations and direction of the flow direction to increase the overall surface accordingly. Such design can be easily implemented using standard tools for corresponding AM manufacturing procedures or CAD programs. Furthermore, the rounded surface on the upstream surface resulting from such deformations originating from distorting the shape accordingly are beneficial for typical applications. The design procedure provide such correspondingly defined surface can be beneficially accompanied by defining parts of the generic geometric form being, for example, a plane or a cone to be maintained. For example, it can be specified that the central point as well as stripes of such form connecting the central point with the part of the filter unit surrounding the strainer part are to be maintained in the original shape. Deforming such structure accordingly results in indentations in the flow direction between such areas containing or at least essentially containing the original shape.

Typically, it is even preferred to include multiple indentations. According to further embodiments it is preferred that the upstream surface provides at least two, more preferred at least three, even more preferred at least four, indentations in the flow direction,
wherein the at least two indentations are symmetrically distributed around the central point of the upstream surface when viewed along the flow direction of the fluid stream. Separating such indentations by fixed parts of the generic geometry shape is unsurprisingly efficient way to provide an inventive design.

Furthermore, it was noted that this is typically beneficial to specify a minimum amount of displacement along the flow direction for a minimum amount of the surface area of the upstream surface. According to further embodiments it is preferred that the filter unit is adapted to filter a fluid stream providing a flow direction,
wherein the strainer part provides an upstream surface and a downstream surface based on the flow direction,
wherein the upstream surface provides a displacement distance of at least 10%, more preferred at least 15%, even more preferred at least 20%, of the average inner diameter of the filter unit in a cross section perpendicular to the flow direction, wherein the displacement distance is the length of the projection of the upstream surface in cross sections along the flow direction onto an axis through the middle of the filter unit in the flow direction. The term "average inner diameter" as used herein refers to the aritmethic mean of the inner diameter in the cross sections within the area of the strainer part. The term "inner diameter" as used herein refers to the arithmetic mean of the biggest and lowest distance of two opposite points of the inner surface of the filter part neglecting the strainer part located between the walls of the filter unit in a cross section perpendicular to the flow direction. The term "opposite points" as used herein refers to the points of the inner surface in a cross section perpendicular to the flow direction, wherein the two points can be connected by a theoretical straight line going through the center of the inner cavity of the filter unit containing the strainer part.

Additionally, it was noted that for typical application cases it is beneficial to provide a smooth transition in the upstream located part of the strainer part. According to further embodiments it is preferred that the filter unit is adapted to filter a fluid stream providing a flow direction, wherein the strainer part provides an upstream surface and a downstream surface based on the flow direction,
wherein the upstream surface provides a maximum displacement distance being a highest displacement distance available, wherein the displacement distance is the length of the projection of the upstream surface in cross sections along the flow direction onto an axis through the middle of the filter unit in the flow direction,
wherein at least 20%, more preferred at least 25%, even more preferred at least 30%, of the upstream surface provides a displacement distance of at least 50% of the maximum displacement distance in relation to the most upstream located point of the upstream surface.

For application cases like gas filtering it was noted that it is typically beneficial to provide a minimum amount of surface area in the upstream located part of the upstream surface. According to further embodiments it is preferred that the filter unit is adapted to filter a fluid stream providing a flow direction,
wherein the strainer part provides an upstream surface and a downstream surface based on the flow direction,
wherein the upstream surface provides a maximum displacement distance being a highest displacement distance available,
wherein the displacement distance is the length of the projection of the upstream surface in cross sections along t after further he flow direction onto an axis through the middle of the filter unit in the flow direction,
wherein at least 15%, more preferred at least 20%, even more preferred at least 25%, of the upstream surface provides a displacement distance of at most 40% of the maximum displacement distance in relation to the most upstream located point of the upstream surface.

Although, it is possible to provide a great variety of geometric forms that might be utilized in this context, it is typically preferred to provide a symmetric upstream surface. According to further embodiments it is preferred that the filter unit is adapted to filter a fluid stream providing a flow direction,
wherein the strainer part provides an upstream surface and a downstream surface based on the flow direction,
wherein the upstream surface is rotational symmetric. Despite the restricted possibilities resulting from such design the overall application, handling and manufacturing overrule the misfits. For example, the additional possibilities of manufacturing errors on the inside and outside of the filter unit especially when utilizing a method like 3D printing increase the required post processing evaluations. Simplifying the design accordingly provides a significant benefit hiding the chance to invest the correspondingly saved time for something different.

Typical designs to be utilized for many applications cases are based on a cone or a plane being, for example, distorted into a furbelow. According to further embodiments it is preferred that the filter unit is adapted to filter a fluid stream providing a flow direction,
wherein the strainer part provides an upstream surface and a downstream surface based on the flow direction,
wherein the upstream surface provides the shape of a cone, a distorted cone or a distorted plane like a furbelow, more preferred the shape of a furbelow. Correspondingly shaped filter units typically provide a reliable filtering with little impact on the flow behavior without requiring detailed adaptions to optimize the characteristics.

A further generic design feature to be typically beneficially included are reinforcement structures. According to further embodiments it is preferred that the strainer part contains at least one reinforcement structure. Such reinforcement structures are, for example, characterized by part of the strainer part providing no cavities. Herein, such reinforcement structure providing no cavity can take the shape of a line extending, for example, along the upstream surface of the strainer part. Additionally or alternatively such reinforcement structure can be located in the inside of the strainer part between the upstream surface and downstream surface. Furthermore, it is possible to provide reinforcement structures extending through the strainer part from upstream surface to the downstream surface.

A specific type of reinforcement structure to be utilized is the reinforcement rib. According to further embodiments it is preferred that the filter unit is adapted to filter a fluid stream providing a flow direction, wherein the strainer part provides an upstream surface and a downstream surface based on the flow direction, wherein the at least one reinforcement structure contains at least one reinforcement rib. The term "reinforcement rib" as used herein refers to a line like structure being part of the strainer part. Such reinforcement rib consists of solid material providing no cavities to allow the fluid stream to pass through and reinforces the mechanical stability of the strainer part. For many embodiments it is preferred that such reinforcement rib is located at the most upstream location of the upstream surface. For example, in case the strainer part provides a furbelow shape the corresponding reinforcement ribs can be present at the most upstream located ends of the folds of the furbelow shaped upstream surface connecting the central point and the part of the filter unit surrounding the strainer part.

The corresponding reinforcement ribs are typically beneficially characterized by a minimum thickness. According to further embodiments it is preferred that the at least one reinforcement rib provide a thickness of at least 0.1mm, more preferred at least 0.13mm, even more preferred at least 0.16mm. Although, it is possible to include a large number of thin reinforcement ribs small amount of larger reinforcement ribs seems to provide better overall results.

While it is possible to provide a smooth upstream surface by placing the reinforcement rib inside the upstream surface it is typically preferred that at least a part of the reinforcement ribs protrude from said surface. According to further embodiments it is preferred that the at least one reinforcement rib protrudes from the upstream surface. Such design seems to further stabilize the overall structure. Although, it should not be understood as limiting the present invention it is assumed that this results from some improved guidance of the fluid stream and distribution of the force resulting from the fluid stream hitting upon the upstream surface. In this context, it was noted that the effect can be further improved by providing such protruding reinforcement ribs additionally on the downstream surface.

The further generic design features to be included in the strainer part is providing a grid like reinforcement structures distributed on the stream surface. According to further embodiments it is preferred that the distance of each point of the upstream surface to the nearest reinforcement rib is at most 10mm, more preferred at most 8mm, even more preferred at most 7mm. It was noted that the correspondingly designed reinforcement structures can be provided with a decreased amount of surface lust due to such reinforcement structures while maintaining the required stability.

The design features that can be applied to a multitude of possible strainer parts is based on a netlike design. According to further embodiments it is preferred that the filter unit is adapted to filter a fluid stream providing a flow direction,
wherein the strainer part provides an upstream surface and a downstream surface based on the flow direction,
wherein at least one reinforcement structure contains a net like arrangement of line like structures being arranged at the upstream surface of the strainer part. Typically, it is preferred that such net like arrangement surrounds the central point preferably located in the middle when viewed along the flow direction. Providing such reinforcement structure similar to a spiderweb is a very reliable and simple structural feature ot be implemented by even unexperienced staff confronted with the task to provide a corresponding design.

According to further embodiments it is preferred that at least one strainer surface, preferable at least the upstream surface, provides at least 2 types of reinforcement ribs. Typically, it is preferred that the reinforcement ribs contain central reinforcement ribs extending from the central point to the part of the filter unit surrounding the strainer part and connecting reinforcement ribs extending from one central reinforcement rib to another central reinforcement rib. According to further embodiments it is preferred that at least 50%, more preferred at least 75%, even more preferred as least 90%, of the central reinforcement ribs provide a higher thickness than the connecting reinforcement ribs. Typically, it is preferred that the thickness is at least 10%, even more preferred at least 20%, higher in one dimension perpendicular to the direction of the reinforcement rib. To provide a further improved stability this increased thickness is provided for two dimensions being perpendicular to the direction of the reinforcement rib and the direction of the reinforcement rib. It was noted that providing a corresponding reinforcement system allows to provide a very high stability and significantly reduce the mass of the strainer part. Additionally, it becomes possible to provide more complex shapes of the channels through the strainer part as the resulting decreased stability can be easily compensated herewith. Surprisingly, the loss of surface area being closed by such reinforcement system can be compensated by adapting the mentioned channels and the overall result is significantly beneficial.

For typical applications it was further noted that the filter unit provides a grid in front of the upstream surface. According to further embodiments it is preferred that the filter unit contains a grid located upstream of the upstream surface. Typically, it is preferred that the grid provides a surface area when projected onto a plane perpendicular to the flow direction being at most 10%, more preferred at most 7%, even more preferred at most 3%, of the surface area of the inner cavity in said cross section located at the most upstream point of the grid. It was noted that including such grid structure providing little material, for example, provides an additional protection against parts of an upstream located filter broken off and transported along the fluid stream.

According to further embodiments it is preferred that the interior of the filter unit is adapted to provide additional space to place the strainer part in it. According to further embodiments it is preferred that the filter unit is adapted to filter a fluid stream providing a flow direction,
wherein the filter unit provides an inner cavity containing the strainer part and being adapted to allow the flow of the fluid stream through the filter unit,
wherein the inner cavity provides an inhomogeneous thickness at the area of the strainer part. Typically, it is preferred that the inner cavity provides an enlargement at the location of the strainer part. Such design allows to, for example, compensate for the lost space of the inner cavity due to the material of the strainer part located in this cavity allowing to tailor the flow behavior of the fluid at this location. If designed accordingly, it becomes possible to reduce the influence of the impact on the flow behavior based on the strainer part so that said influence becomes essentially irrelevant.

Accepting such interior of the filter unit can be efficiently realized by some curvature. According to further embodiments it is preferred that the inhomogeneous thickness of the inner cavity is realized a curvature of the inner cavity when viewed in a cross section along the flow direction. Providing such curved design and the correspondingly smooth transition of the provided space seems to provide a more homogeneous flow of the fluid including a less tubular fluid stream increasing the overall capacity of the fluid stream to be filtered.

Furthermore, it was noted that for typical applications it is beneficial to provide an inhomogeneous diameter of the channels extending through the strainer part. According to further embodiments it is preferred that the filter unit is adapted to filter a fluid stream providing a flow direction, wherein the strainer part provides an upstream surface and a downstream surface based on the flow direction,
wherein the strainer part provides at least one cavity to enable the fluid to flow through the strainer part from the upstream side to the downstream side,
wherein the at least one cavity provides openings on the upstream side and the downstream side of the strainer part, wherein at least 90% of the opening on the downstream side are bigger than the connected openings of the upstream side. Typically, it is preferred that at least 90%, more preferred at least 95%, of the opening on the downstream side provide a size being at least 10%, more preferred at least 15%, even more preferred at least 20%, bigger. It was noted as correspondingly designed for the union seem to provide an improved flow behavior.

A further characteristic to be beneficially included in the correspondingly designed strainer part of the filter unit is based on the inclination of the upstream surface. According to further embodiments it is preferred that the filter unit is adapted to filter a fluid stream providing a flow direction,
wherein the strainer part provides an upstream surface based on the flow direction,
wherein at least 30%, more preferred at least 40%, even more preferred at least 50%, of the upstream surface provides an angle of at least 60°, more preferred at least 65°, even more preferred at least 70°, based the angle of the upstream surface to an axis parallel to the flow direction. Surprisingly, it was noted that the corresponding strainer parts seem to provide the decreased amount of clogging during the usage for many applications and contaminations.

A method to be especially beneficially utilized to manufacture the corresponding filter units is additive manufacturing. According to further embodiments it is preferred that the filter unit has been manufactured using additive manufacturing, preferably 3D printing, even more preferred binder jetting. Surprisingly, it was noted that especially binder jetting is a highly efficient method to manufacture the corresponding filter units. Although, it should be expected that such method is unsuitable to provide a highly reliable filter unit providing the required consistency of the openings and overall stability to withstand the forces as present in a continuous flow engine it was noted that binder jetting is able to provide filter units being especially beneficial in this context. In fact, the combination of the flexibility and speed of the binder jetting process in combination with the precision provided by this method being lower compared to a 3D printing processes like selective laser melting was identifies to provide best results for application cases like fuel supply for continuous flow engines including gas turbines and steam turbines.

Typically, it is preferred that the material at least of the strainer part is either a metal like especially titanium or a metal alloy. Despite the possibilities to tailor the characteristics of, for example, polymers or the chemical stability of, for example, glasses, it was noted that such materials are typically to be preferred to be used for typical application cases like the use as fuel filter for a gas turbine. This becomes significant for binder jetting manufacturing procedures. Despite the higher difficulty to sinter such materials the benefits obtained provide a significant benefit despite, for example, the eventual requirement to provide a security element, wherein such security element is adapted to protect the strainer part against big particles like providing a size of at least 10% of the average size of the strainer part measured perpendicular to the flow direction. For example such security element can be provided in the form of a grid arranged upstream of the strainer part.

An example of a typical shape that can be utilized according to present invention is based on the number of indentations introduced into the generic geometric shape, wherein said indentations provide a certain minimum distance referring to the ideal geometric shape. According to further embodiments it is preferred that the filter unit is adapted to filter a fluid stream providing a flow direction,
wherein the strainer part provides an upstream surface, wherein the upstream surface provides the shape of a deformed cone providing a central point located upstream in the middle of the strainer part when viewed along the flow direction, wherein the upstream surface provides at least two, more preferred at least three, even more preferred at least five, indentations,
wherein the indentations provide a distance between the upstream surface and the surface of a theoretical cone contacting the upstream surface partially is at least 5%, more preferred at least 7%, even more preferred at least 9%, of the diameter of the strainer part measured perpendicular to the flow direction. In many applications it is typically preferred that the overall shape still resembles a theoretical cone shape.

According to further embodiments it is preferred that at least 10% of the upstream surface of the strainer part provides a distance to the theoretical cone contacting the upstream surface at least partially of at most 10%, more preferred at most 7%, even more preferred at most 5%, of the diameter of the strainer part measured perpendicular to the flow direction. Typically, it is even preferred that at least 15%, even more preferred at least 20%, of the upstream surface provides such distance. Surprisingly, it appears that only small adaptions are required to adapt such generic shape in the inventive type of strainer part reducing the overall effort required to provide such shape and also significantly reducing the time and processing power required to simulate the flow behavior of such strainer part.

An alternative example of an inventive shape provided for the upstream surface of the strainer part is based on a deformed plane. According to further embodiments it is preferred that the filter unit is adapted to filter a fluid stream providing a flow direction,
wherein the strainer part provides the shape of a deformed plane, wherein the deformed plane is characterized by indentations in the downstream direction, wherein the indentations are located around a central point of the deformed plane being located in the middle of the deformed plane and located at the upstream end of the deformed plane. Typically, it is preferred that the filter unit provides an inner surface surrounding the strainer part, wherein at least two, more preferred at least three, even more preferred at least five, indentations of the deformed plane are separated from each other by a part of the upstream surface extending from the central point to the inner surface, wherein the part of the upstream surface deviates at most 5%, more preferred at most 2%, even more preferred at most 1%, from a theoretical plane extending through the central point, based on the diameter of the strainer part measured perpendicular to the flow direction. Additionally or alternatively, it is preferred that the strainer part provides a distance between the upstream surface of the indentations and a theoretical plane extending through the central point of at least 10%, more preferred at least 25%, even more preferred at least 35%, of the diameter of the strainer part measured perpendicular to the flow direction.

Furthermore, it was noted that it becomes possible to significantly reduce the size of such filter unit. According to further embodiments it is preferred that the filter unit is adapted to filter a fluid stream providing a flow direction,
wherein the filter unit provides a length of at most 3 times, more preferred at most 2.5 times, even more preferred at most 2 times, the length of the strainer part measured along the flow direction. Focusing on optimizing the strainer part preferably combined with the modular system based on the counterpart to filter units to be placed into surprisingly results in the possibility to reduce the overall size of the filter unit. This, for example, allows to reduce the amount of waste material during manufacturing and the number of filter units being manufactured. Furthermore, the reduced size significantly simplifies the utilization in a continuous flow engine and the possibilities of application.

Based on the benefits provided by the inventive filter unit it furthermore becomes possible to provide a modular system. According to further embodiments it is preferred that the filter unit is a modular filter unit,
wherein the modular filter unit is adapted to be inserted into a counterpart. Such modular filter unit preferably contains an outer surface providing means to interact with the counterpart. Such means to interact are preferably means to fasten the modular filter unit in the counterpart and/or to define the predetermined position and/or orientation of the modular filter unit inside the counterpart.

Typically, it is preferred that the connection of the filter unit in such modular system is based on a detachable connection. According to further embodiments it is preferred that the filter unit provides an outer side,
wherein the outer side is adapted to be detachably connected to a counterpart being part of a continuous flow engine. Typically, it is preferred that the outer side is adapted to interact with corresponding elements of the counterpart to provide the predetermined position and/or orientation of the filter unit, wherein the position of the filter unit in the counterpart can be secured by the pressure applied by the fluid stream during use of the filter unit.

Furthermore, the present application discloses a kit containing a filter unit as disclosed and a counterpart adapted receive the filter unit, wherein the counterpart is adapted to be used as part of the continuous flow engine.

Typically, it is preferred that the counterpart is adapted to not be detached from the continuous flow engine during an exchange of the filter unit. For example, the counterpart can be non-detachably connected to the continuous flow engine and be provided with a rotating element to allow the counterpart to be moved out of the fluid stream connection. The filter unit can be exchanged and the counterpart again be moved back into the original position of enable a fast and secure exchange of the filtering element. Herein, the possibility of provide a surprisingly small size of the inventive filter unit while providing high filtering capabilities, for example, allows to introduce a parallel second connection line including a second kit. Therefore, the inventive filter unit allows to upgrade an existing continuous flow engine despite the high demands with regard to the space requirements in such way. After such upgrade the filter unit can even be exchanged during use by switching to such parallel bypass connection. Thus, based on the surprisingly low costs for manufacturing such high quality and small size filter unit this significantly increases the possible modes of operation. Including using less cleaned fuel sources, switching to different kinds of fuel, and so on. While such changes would be accompanied by unscheduled downtimes or risks before the new system allows to flexibly adapt the filtering according to the present needs and render such changes easily applicable.

A typical application case is the use as part of the fuel supply of a continuous flow engine. According to further embodiments it is preferred that the counterpart is adapted to be used as a part of the fuel supply of the continuous flow engine. Herein, the fluid streaming through the filter unit is typically a gas. It was noted that the application in such part of the continuous flow engine allows to reliably and efficiently remove impurities like particles from a gas stream making best use of the benefits provided by the design as described herein.

A possibility to beneficially secure a position of the filter unit in the counterpart utilizes a narrowing of the inner surface of the counterpart. According to further embodiments it is preferred that the counterpart provides an inner surface adapted to contact an outer surface of the filter unit,
wherein the part of the inner surface of the counterpart being adapted to contact the outer surface of the filter unit being located upstream is wider than the at least a part of the inner surface adapted to contact the outer surface of the filter unit located downstream. For example, it can be preferred that the circumference of the corresponding inner surface decreases along the flow direction. This allows to easily securely fix the filter unit in such counterpart without any further tool.

A very beneficial possibility to provide a predetermined orientation of the full the unit is based on protrusions and recesses. According to further embodiments it is preferred that the counterpart provides an inner surface adapted to contact an outer surface of the filter unit,
wherein the inner surface of the counterpart adapted to contact the outer surface of filter unit and the outer surface of the filter unit adapted to contact the inner surface of the counterpart provide at least one protrusion and at least one recess to interact. For example, the inner surface can provide a protrusion while the outer surface provides a corresponding recess, wherein the filter unit is put inside the counterpart along the axis resulting from the indentation sliding along the recess. This allows to easily ensure that the filter unit is attached to the counterpart in a predetermined position and orientation. For example, the protrusion can be line shaped and allows to slight along the recess into a predetermined position. Herein, such recess does not necessarily have to provide an exact counter shape of the protrusion. For example, the more upstream located part of the recess can be wider allowing to place the filter unit at the beginning in a slightly incorrect orientation while inserting the filter unit in the counterpart automatically corrects the orientation accordingly.

Furthermore, the present application discloses a continuous flow engine containing an inventive filter unit or an inventive kit or an inventive counterpart.

Furthermore, the present application discloses a method of upgrading or servicing a continuous flow engine, wherein the method includes introducing an inventive filter unit or an inventive kit.

To that the inventive filter unit can be especially beneficially utilized to filter the fuel supply. According to further embodiments it is preferred that the flow engine is adapted to utilize a fluid stream as fuel supply, wherein the filter unit is utilized to filter at least a part of the fuel supply. Especially good results of been obtained when filtering a gas fluid utilized as fuel supply. In case of such application very high reliability as well as good filtering effect have been observed.

Especially in case of an upgrade the inventive filter unit and/or kit can be beneficially introduced as part of the fuel supply connection. According to further embodiments it is preferred that the method contains the step of replacing a part of the fuel supply pipes with an inventive filter unit and/or an inventive kit. For example, it is possible to provide counterparts adapted to standard sized fuel pipes, cut out a bit of the fuel pipes and insert an inventive kit. Based on the very good flow behavior through the inventive filter unit the flow and pressure in the fuel supply is only minorly influenced simplifying such change significantly.

Furthermore, the present application discloses a use of a filter unit as disclosed or a kit as disclosed to filter a fluid stream of a continuous flow engine.

The present invention was only described in further detail for explanatory purposes. However, the invention is not to be understood being limited to these embodiments as they represent embodiments providing benefits to solve specific problems or fulfilling specific needs. The scope of the protection should be understood to be only limited by the claims attached.

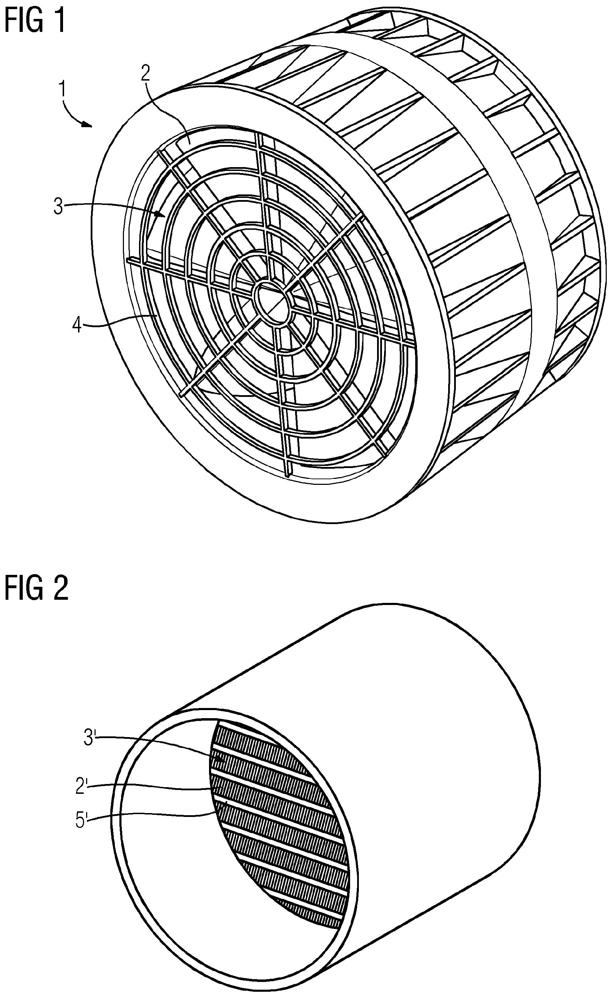

Figure 1 shows a schematic side view of an inventive filter unit 1 adapted to be utilized in a continuous flow engine. The specific example as shown in figure 1 is adapted to be utilized in a gas turbine being an example of the continuous flow engine to filter small particles out of the fuel stream utilized in the device. Based on the possibilities to easily adapt the filter unit 1 it becomes possible to easily specifically adapted the filter unit 1 according to different fields and contaminations. The example as shown in figure 1 is utilized to filter a gaseous fuel containing still a significant amount of small particles when reaching the filter unit 1 is shown.

The filter unit 1 provides a strainer part 3 providing two strainer surfaces. One strainer surface located upstream being the upstream surface 2 and one strainer surface located downstream being the downstream surface. The partially visible upstream surface 2 as well as the not visible downstream surface are not planar. Although, the thickness of the strainer part 3 in the flow direction is essentially homogeneous, the upstream surface 2 and downstream surface are not provide a slightly different shape. On both sides of the strainer part 3 reinforcement structures are extending along and out of the upstream surface 2 and downstream surface resulting in the slightly different form.

The upstream surface 2 of the strainer part 3 provides a very homogeneous size limit of the openings located at the surface. At least 99.9% of the openings located at the upstream surface 2 provide a size of at most 80pm measured along two axes being perpendicular to the upper surface and to each other. Despite the significant amount of particle contamination of the gaseous fuel amount of noted clogging of the openings was very low over a long period of usage. Only when the significant amount of the volume located upstream of the strainer part 3 was filled with collected particles the filtering effect started to become impaired in the significant way.

Furthermore, it was surprisingly noted that the strainer part 3 can be provided with a low thickness despite the force it has to withstand during its utilization. Based on the area of the upstream surface 2 99% of the strainer part 3 provides a thickness of at most 6mm measured perpendicular to the upstream surface 2 from the upstream surface 2 to the downstream surface. Furthermore, the thickness is very homogeneous even taking into account the reinforcement structures extending out of the upstream surface 2 and downstream surface. Example as shown 92% of the upstream surface 2 provides a distance to the downstream surface differing at most 30% from the average distance between the upstream surface 2 and the downstream surface measured along the flow direction.

The overall shape of the upstream surface 2 is based on a deformed plane. The indentations included are more clearly visible in the different figure and will be discussed in more detail there. The overall shape provided by the upstream surface 2 is the furbelow shape. In front of the upstream surface 2 a grid 4 is placed providing an additional protection against bigger parts of debris that should not be included in the fluid stream, but might still be resulting from, for example, parts of upstream located filter being broken off.

The filter unit 1 has been manufactured using binder jetting. Surprisingly, it was noted that the inventive design can be realized with this method providing a preciseness being satisfactory to fulfill the requirements. Taking into account the possible damages resulting from contaminations of particles being not filtered out the possibility to fulfill the required reliable shape was surprisingly possible. It was expected that based on the required shrinking process of the green body acquired form the binder jetting manufacturing process some slight deviations might render the filtering incomplete. However, using the improved design as disclosed herein it becomes possible to utilize this very fast and flexible manufacturing method to provide such filter unit 1 being reliable even for high quality applications.

Figure 2 shows a schematic side view of a non-inventive filter. Herein, the filter contains a strainer part 3' being attached in a pipe like surrounding. The upstream surface 2' and downstream surface provide reinforcement ribs 5' being parallel to each other and being evenly distributed on the strainer surfaces. The corresponding design has been manufactured and test, but the results obtained were not satisfying. Either the replacement of the filter has to be performed very often or the chance of the filter being ripped apart apparently increases significantly. Increasing the thickness of the strainer part improved the stability up to a certain degree, but the streaming behavior through the filter was significantly impaired. Adapting the channels through such thicker strainer part significantly lowers the stability again. Also, different kinds of arrangements of the reinforcement ribs like a star like arrangement or net like arrangement do not succeed to overcome the problems. Significantly increasing the thickness or number of reinforcement ribs on the other hand also impairs the fluid stream.

Such filter is suitable for low strain purposes like last stage filter systems to provide a last security that, for example, particles that should already be filtered out in an earlier stage are stopped. However, it was not possible to provide a filter with such design fulfilling the significantly higher demands as specified herein.

Furthermore, it was noted that the problems increase when utilizing binder jetting as manufacturing method. It is assumed that even smallest deviations and weaknesses resulting from this method lead to a local weakness. Such local weakness becomes the origin of a spreading damage leading to a catastrophic failure of the filter. This might be the reason why binder jetting despite its attractiveness based on many merits provided is not utilized for the manufacturing of such complex filter products requiring to fulfill the demands as specified herein.

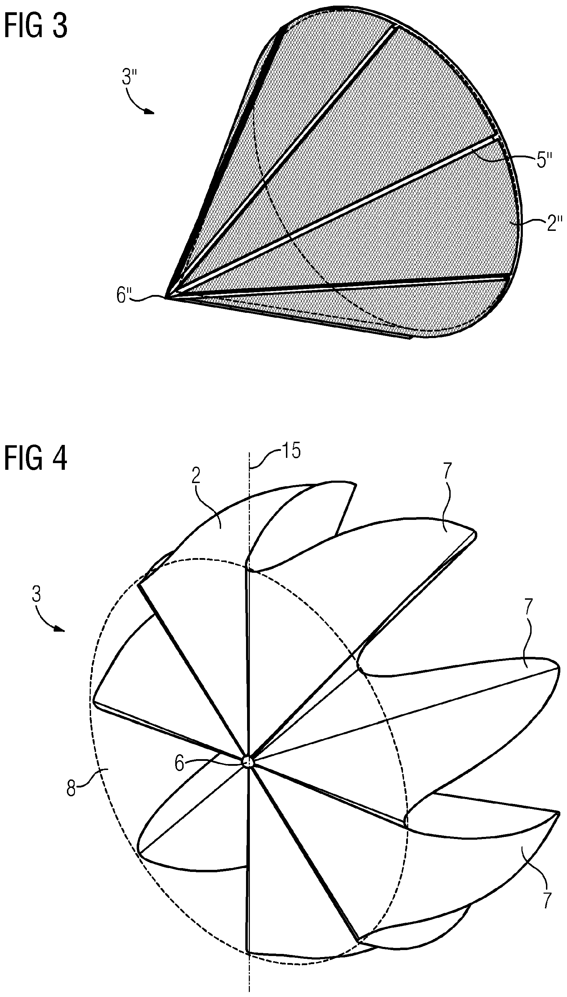

Figure 3 shows a schematic side view of an alternative strainer part 3'' to be utilized in an inventive filter unit. The surrounding part of the filter unit being connected to the strainer part 3'' is not shown in the figure. Herein, the overall shape of the strainer part 3'' as shown in the figure is the regular cone. The upper surface of the strainer part 3'' provides multiple reinforcement structures providing the shape of ribs extending from the central point 6'' of the cone to the surrounding part of the filter unit. Comparable to the case of the strainer part 3'' as shown in figure 1 the reinforcement structures taking the shape of reinforcement ribs 5'' as extend out of the upstream surface 2'' and consist of a homogeneous material without cavities. The ribs extending along the upstream surface 2'' provide the thickness of at least 0.18 mm.

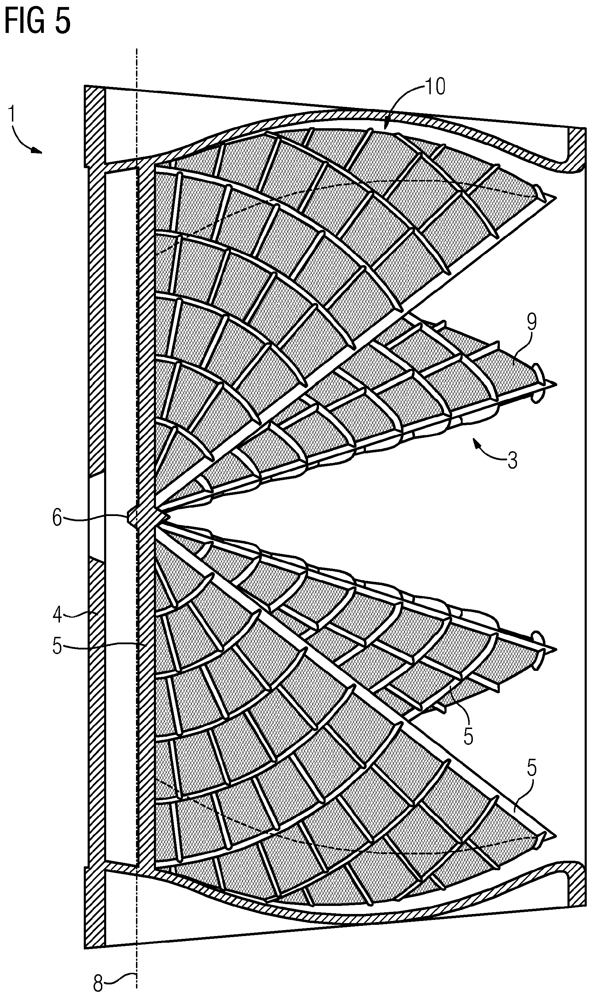

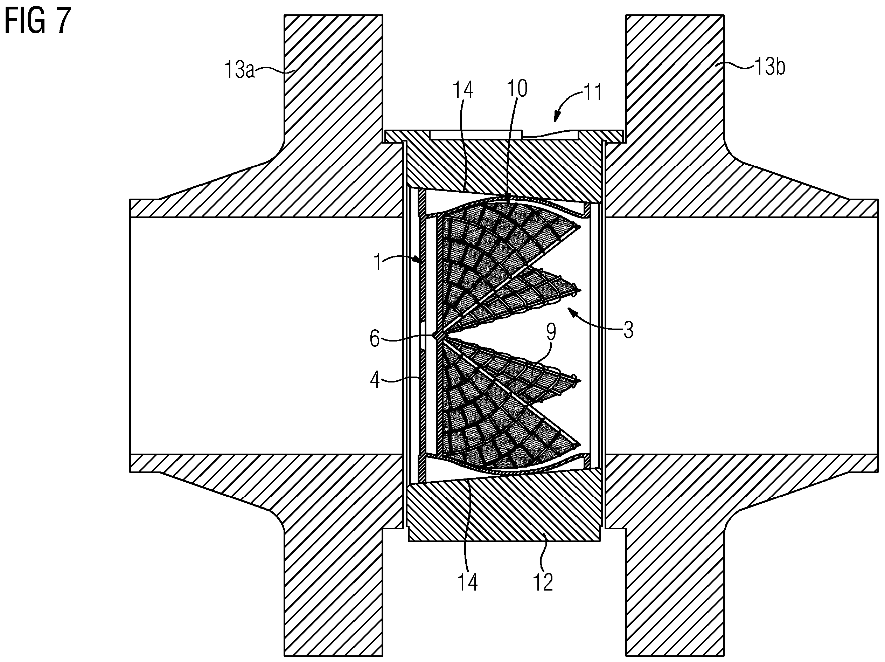

Figure 4 shows a schematic side view of the upstream surface 2 of the strainer part 3 of the inventive filter unit as shown in figure 1. The surrounding part of the filter unit the strainer part 3 is attached to is not shown in the figure. Additionally, the figure shows an axis 15 indicating the orientation of the cross section shown in figure 5 and 7.

The upstream surface 2 provides the shape of a deformed plane. Herein, the original plane 8 is indicated in the figure. Different deformation of said plane 8 includes eight indentations 7 symmetrically distributed around a central point 6 providing a furbelow shape. This results in a rotational symmetry based on an axis through the central point 6 along the flow direction. The central point 6 on the other hand is connected to the part of the filter unit surrounding the strainer part 3 by line like connections separating the indentations 7 from each other.

The indentations 7 extend significantly in the flow direction providing a displacement distance of 65% of the average inner diameter of the filter unit in a cross section perpendicular to the flow direction. Herein, a significant amount of the area of the upstream surface 2 provides an increased displacement distance. Herein, the displacement distance is the length of the projection of the upstream surface 2 in cross sections along the flow direction onto an axis through the middle of the filter unit in the flow direction. Overall the area of the upper surface providing a displacement distance of at least 50% or at most 40% of the maximum displacement distance is around the same.

Figure 5 shows a schematic cross section along the flow direction through the central point 6 and the axis as shown in figure 4 of the inventive filter unit 1 as shown in figure 1.

As shown in figure 1 the grid 4 arranged in front of the upstream surface 2 is visible in the cross section.

As mentioned with regard to figure 1 the overall shape of the strainer part 3 is a deformed plane resulting in a furbelow shape. Herein, the original plane 8 being deformed to provide the furbelow shape of the embodiment as shown in this figure is also indicated. The upstream surface 2 and downstream surface 9 of the strainer part 3 contain multiple reinforcement structures providing the shape of ribs. Some of these reinforcement ribs 5 extend from the central point 6 of the strainer part 3 to the surrounding part of the filter unit 1. Further reinforcement ribs 5 extend between the aforementioned reinforcement ribs 5 providing a net like arrangement of a reinforcement rib 5 structure covering the downstream surface 9 shown in figure 5 as well as the upstream surface 2 being not visible in this figure.

The ribs extending along the downstream surface 9 provide the thickness of at least 0.17 mm. The corresponding reinforcement structures taking the shapes of multiple ribs extending along the upstream surface 2 ensure that each point of the upstream surface 2 provides a distance of at most 5 mm to the nearest reinforcement rib 5. The same applies to the reinforcement ribs 5 located on the upstream surface 2. The reinforcement ribs 5 contain central reinforcement ribs 5 extending from the central point 6 of the strainer part 3 of the filter unit 1 surrounding the strainer part 3 and connecting reinforcement ribs 5. A part of the connecting reinforcement ribs 5 extend from one central reinforcement rib 5 to another central reinforcement rib 5, wherein these connecting reinforcement ribs 5 circle around the central point 6. Further connecting reinforcement ribs 5 extend between the circling connecting reinforcement ribs 5 resulting in an overall net like arrangement of the reinforcement ribs 5 located on the strainer surfaces. The reinforcement ribs 5 on both strainer surfaces extend out of said surfaces. Herein, the central reinforcement ribs 5 extend 35% wider out of the strainer surfaces and are 30% thicker than the connecting reinforcement ribs 5.

The strainer is located in the interior cavity of the filter unit 1, wherein the corresponding interior cavity of the filter unit 1 provides an inhomogeneous thickness. The inner surface being connected to the strainer part 3 provides a curved shape in a cross section along the flow direction resulting in an increase space provided for the strainer part 3. Providing such shape allows to optimize the fluid stream passing through the strainer part 3. For example, the flow through the filter unit 1 as shown in figure 5 provides a significantly reduced amount of turbulent flow significantly increasing the overall flow behavior.

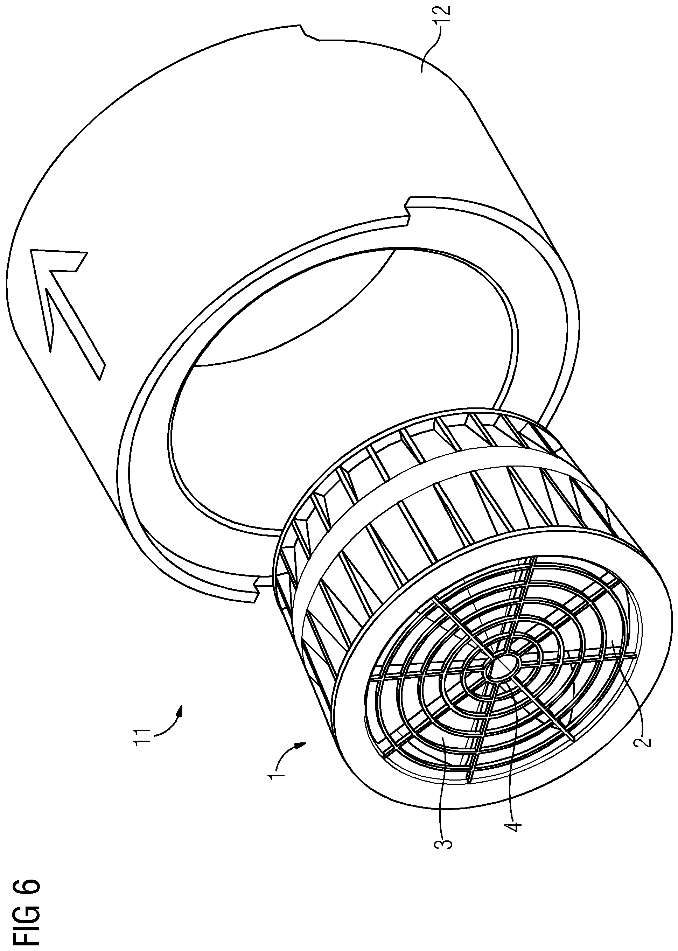

Figure 6 shows a schematic side view of an inventive kit 11 containing the filter unit 1 according to figure 1 and a counterpart 12. The counterpart 12 is adapted to be used as part of fuel supply of a continuous flow engine. The counterpart 12 is adapted to be temporarily detached from the fuel supply to replace the filter unit 1 being detachably connected to the counterpart 12.

Like shown in figure 1 the filter unit 1 shows a part of the upstream surface 2 being partially covered by a grid 4. Said grid 4 provides a very reliable protection against bigger parts swept along by the fluid.

Figure 7 shows a schematic cross section along the flow direction through the central point 6 and the axis as shown in figure 4 of the inventive kit 11 as shown in figure 6, wherein the kit 11 is utilized as part of a fuel supply of a continuous flow engine. The cross section shown in figure 7 shows clearly the inclination of the inner surface of the counterpart 12 and the outer surface of the filter unit 1 within the area of the filter unit 14. This allows to easily ensure the position of the filter unit 1 during use. The fluid stream from the upstream part 13a of the fuel supply and firmly holds the filter unit 1 in its positions while the fluid passes the strainer part 3 and exits the downstream surface 9 to reach the downstream part 13b of the fuel supply.

The strainer part 3 is located in a part of the filter unit 1 providing no homogeneous thickness of the inner cavity. The inner cavity provide a curved shape in the cross section shown resulting in a widening 10 of the cavity within the area of the strainer part 3. Providing such design allows to significantly reduce fluctuations and turbulences influencing the overall capacity of fluid being able to pass the strainer part.

Such filter can also be easily implemented as addition to an existing fuel supply without any filter at this location. In such case the pipe of the fuel supply is simply cut apart and is partially replaced by the kit 11 as shown in the figure. The corresponding kit 11 is typically also provided as upgrade kit 11 already containing the required fittings and seals to introduce such filter system at any located. Based on the possibility to provide such very small filter unit 1 providing highly efficient filtering despite the low overall length it is essentially possible to easily introduce it at any continuous flow engine without problems.

An example of a typical problem during realization of other filter systems is that the larger space required for such upgrade makes it difficult to find a spot to place such filter system. Either they are difficult to access rendering the replacement of the filter unit 1 complicated. Or the corresponding sections provides multiple curves limiting the number of straight sections and their length to be utilized accordingly. The inventive combination of small size, high filtering effect and high durability and usage, however, allows to place such filtering system far more flexible.

The scope of protection of the present invention is specified by the appended claims and is not restricted by the features explained in the description or shown in the drawing.

## Claims

1. Method of manufacturing a filter unit (1) for a continuous flow engine,
wherein the filter unit (1) is adapted to filter a fluid stream, preferably a gas stream,
wherein the filter unit (1) provides a strainer part (3, 3") providing two strainer surfaces,
wherein at least one of the two strainer surfaces is not planar,
wherein the filter unit (1) has been manufactured using additive manufacturing,
wherein the filter unit (1) is adapted to filter a fluid stream providing a flow direction,
wherein the strainer part (3, 3'') provides an upstream surface (2, 2', 2'') and a downstream surface based on the flow direction,
wherein the filter unit (1) contains at least one reinforcement structure,
wherein the at least one reinforcement structure contains at least one reinforcement rib (5, 5''),
wherein the filter unit (1) is manufactured using binder jetting.

2. Method according to claim 1,
wherein the upstream surface (2, 2', 2'') provides openings, wherein at least 99% of the openings on the upstream surface (2, 2', 2'') of the strainer part (3, 3'') provide a size of at most 80µm in at least two dimensions being perpendicular to each other and perpendicular to the upstream surface (2, 2', 2").

3. Method according to any of claims 1 to 2, wherein the upstream surface (2, 2', 2'') provides a displacement distance of at least 10% of the average inner diameter of the filter unit (1) in a cross section perpendicular to the flow direction, wherein the displacement distance is the length of the projection of the upstream surface in cross sections along the flow direction onto an axis through the middle of the filter unit (1) in the flow direction.

4. Method according to any of claims 1 to 3, wherein the upstream surface (2, 2', 2") provides a maximum displacement distance being a highest displacement distance available, wherein the displacement distance is the length of the projection of the upstream surface (2, 2', 2'') in cross sections along the flow direction onto an axis through the middle of the filter unit (1) in the flow direction,
wherein at least 20% of the upstream surface (2, 2', 2") provides a displacement distance of at least 50% of the maximum displacement distance in relation to the most upstream located point of the upstream surface (2, 2', 2").

5. Method according to any of claims 1 to 4, wherein the upstream surface (2, 2', 2") provides a maximum displacement distance being a highest displacement distance available, wherein the displacement distance is the length of the projection of the upstream surface (2, 2', 2'') in cross sections along the flow direction onto an axis through the middle of the filter unit (1) in the flow direction,
wherein at least 15% of the upstream surface (2, 2', 2") provides a displacement distance of at most 40% of the maximum displacement distance in relation to the most upstream located point of the upstream surface (2, 2', 2").

6. Method according to any of claims 1 to 5, wherein the upstream surface (2, 2', 2'') provides the shape of a cone or furbelow.

7. Method according to any of claims 1 to 6, wherein the at least one reinforcement rib (5, 5") provides a thickness of at least 0.1mm.

8. Method according to any of claims 1 to 7, wherein the filter unit (1) provides an inner cavity containing the strainer part (3, 3'') and being adapted to allow the flow of the fluid stream through the filter unit (1),
wherein the inner cavity provides an inhomogeneous thickness at the area of the strainer part (3, 3'').

9. Method according to any of claims 1 to 8, wherein the strainer part (3, 3") provides at least one cavity to enable the fluid to flow through the strainer part (3, 3") from the upstream side to the downstream side,
wherein the at least one cavity provides openings on the upstream side and the downstream side of the strainer part (3, 3"),
wherein at least 90% of the opening on the downstream side are bigger than the connected openings of the upstream side.

10. Method according to any of claims 1 to 9, wherein the strainer part (3, 3") provides the shape of a deformed plane, wherein the deformed plane is **characterized by** indentations (7) in the downstream direction, wherein the indentations (7) are located around a central point (6, 6'') of the deformed plane being located in the middle of the deformed plane and located at the upstream end of the deformed plane.

## Patentansprüche

1. Verfahren zur Herstellung einer Filtereinheit (1) für eine Strömungsmaschine,
wobei die Filtereinheit (1) dazu ausgeführt ist, einen Fluidstrom, vorzugsweise einen Gasstrom, zu filtern,
wobei die Filtereinheit (1) ein Siebteil (3, 3'') bereitstellt, das zwei Siebflächen bereitstellt,
wobei mindestens eine der zwei Siebflächen nicht planar ist, wobei die Filtereinheit (1) unter Verwendung additiver Fertigung hergestellt worden ist,
wobei die Filtereinheit (1) dazu ausgeführt ist, einen Fluidstrom zu filtern, der eine Strömungsrichtung bereitstellt, wobei das Siebteil (3, 3'') eine stromaufwärtige Fläche (2, 2', 2'') und eine stromabwärtige Fläche basierend auf der Strömungsrichtung bereitstellt,
wobei die Filtereinheit (1) mindestens eine Verstärkungsstruktur enthält,
wobei die mindestens eine Verstärkungsstruktur mindestens eine Verstärkungsrippe (5, 5'') enthält,
wobei die Filtereinheit (1) unter Verwendung von Bindemitteljetten hergestellt wird.

2. Verfahren nach Anspruch 1,
wobei die stromaufwärtige Fläche (2, 2', 2'') Öffnungen bereitstellt,
wobei mindestens 99% der Öffnungen auf der stromaufwärtigen Fläche (2, 2', 2'') des Siebteils (3, 3'') eine Größe von höchstens 80 µm in mindestens zwei Dimensionen bereitstellen, die senkrecht zueinander und senkrecht zu der stromaufwärtigen Fläche (2, 2', 2'') verlaufen.

3. Verfahren nach einem der Ansprüche 1 bis 2, wobei die stromaufwärtige Fläche (2, 2', 2'') eine Verschiebungsstrecke von mindestens 10% des durchschnittlichen Innendurchmessers der Filtereinheit (1) in einem Querschnitt senkrecht zu der Strömungsrichtung bereitstellt, wobei die Verschiebungsstrecke die Länge der Projektion der stromaufwärtigen Fläche in Querschnitten entlang der Strömungsrichtung auf eine Achse durch die Mitte der Filtereinheit (1) in der Strömungsrichtung ist.

4. Verfahren nach einem der Ansprüche 1 bis 3, wobei die stromaufwärtige Fläche (2, 2', 2") eine maximale Verschiebungsstrecke bereitstellt, die eine größte verfügbare Verschiebungsstrecke ist,
wobei die Verschiebungsstrecke die Länge der Projektion der stromaufwärtigen Fläche (2, 2', 2'') in Querschnitten entlang der Strömungsrichtung auf eine Achse durch die Mitte der Filtereinheit (1) in der Strömungsrichtung ist,
wobei mindestens 20% der stromaufwärtigen Fläche (2, 2', 2") eine Verschiebungsstrecke von mindestens 50% der maximalen Verschiebungsstrecke in Bezug auf den am weitesten stromaufwärtig gelegenen Punkt der stromaufwärtigen Fläche (2, 2', 2'') bereitstellt.

5. Verfahren nach einem der Ansprüche 1 bis 4, wobei die stromaufwärtige Fläche (2, 2', 2'') eine maximale Verschiebungsstrecke bereitstellt, die eine größte verfügbare Verschiebungsstrecke ist,
wobei die Verschiebungsstrecke die Länge der Projektion der stromaufwärtigen Fläche (2, 2', 2'') in Querschnitten entlang der Strömungsrichtung auf eine Achse durch die Mitte der Filtereinheit (1) in der Strömungsrichtung ist,
wobei mindestens 15% der stromaufwärtigen Fläche (2, 2', 2'') eine Verschiebungsstrecke von höchstens 40% der maximalen Verschiebungsstrecke in Bezug auf den am weitesten stromaufwärtig gelegenen Punkt der stromaufwärtigen Fläche (2, 2', 2'') bereitstellt.

6. Verfahren nach einem der Ansprüche 1 bis 5, wobei die stromaufwärtige Fläche (2, 2', 2'') die Form eines Kegels oder einer Krause bereitstellt.

7. Verfahren nach einem der Ansprüche 1 bis 6, wobei die mindestens eine Verstärkungsrippe (5, 5'') eine Dicke von mindestens 0,1 mm bereitstellt.

8. Verfahren nach einem der Ansprüche 1 bis 7, wobei die Filtereinheit (1) einen inneren Hohlraum bereitstellt, der das Siebteil (3, 3'') enthält und dazu ausgeführt ist, den Fluss des Fluidstroms durch die Filtereinheit (1) zu gestatten,
wobei der innere Hohlraum eine inhomogene Dicke an dem Bereich des Siebteils (3, 3'') bereitstellt.

9. Verfahren nach einem der Ansprüche 1 bis 8, wobei das Siebteil (3, 3'') mindestens einen Hohlraum bereitstellt, um zu ermöglichen, dass das Fluid von der stromaufwärtigen Seite zu der stromabwärtigen Seite durch das Siebteil (3, 3'') strömt,
wobei der mindestens eine Hohlraum Öffnungen auf der stromaufwärtigen Seite und der stromabwärtigen Seite des Siebteils (3, 3") bereitstellt,
wobei mindestens 90% der Öffnung auf der stromabwärtigen Seite größer als die verbundenen Öffnungen der stromaufwärtigen Seite sind.

10. Verfahren nach einem der Ansprüche 1 bis 9, wobei das Siebteil (3, 3'') die Form einer deformierten Ebene bereitstellt, wobei die deformierte Ebene durch Vertiefungen (7) in der stromabwärtigen Richtung gekennzeichnet ist, wobei die Vertiefungen (7) um einen Mittelpunkt (6, 6'') der deformierten Ebene herum angeordnet sind, der in der Mitte der deformierten Ebene angeordnet ist und an dem stromaufwärtigen Ende der deformierten Ebene angeordnet ist.

## Revendications

1. Procédé de fabrication d'une unité (1) de filtration d'un moteur à écoulement continu,
dans lequel l'unité (1) de filtration est propre à filtrer un courant de fluide, de préférence un courant gazeux,
dans lequel l'unité (1) de filtration ménage une partie (3, 3'') de tamisage ménageant deux surfaces de tamisage,
dans lequel au moins l'une des deux surfaces de tamisage n'est pas plane,
dans lequel l'unité (1) de filtration a été fabriquée en utilisant une fabrication additive,
dans lequel l'unité (1) de filtration est propre à filtrer un courant de fluide en ménageant un sens d'écoulement,
dans lequel la partie (3, 3") de tamisage ménage une surface (2, 2', 2'') en amont et une surface en aval sur la base du sens d'écoulement,
dans lequel l'unité (1) de filtration contient au moins une structure de renfort,
dans lequel la au moins une structure de renfort contient au moins une nervure (5, 5'') de renfort,
dans lequel l'unité (1) de filtration est fabriquée en utilisant une projection de liant.

2. Procédé suivant la revendication 1,
dans lequel la surface (2, 2', 2") en amont ménage des ouvertures, dans lequel au moins 99 % des ouvertures sur la surface (2, 2', 2'') en amont de la partie (3, 3") de tamisage ménage une dimension d'au plus 80 µm dans au moins deux dimensions perpendiculaires l'une à l'autre et perpendiculaires à la surface (2 ,2', 2") en amont.

3. Procédé suivant l'une quelconque des revendications 1 à 2, dans lequel la surface (2, 2', 2") en amont ménage une distance de déplacement d'au moins 10 % du diamètre intérieur moyen de l'unité (1) de filtration dans une section transversale perpendiculaire au sens d'écoulement, dans lequel la distance de déplacement est la longueur de la projection de la surface en amont dans des sections transversales suivant le sens d'écoulement sur un axe passant par le milieu de l'unité (1) de filtration dans le sens d'écoulement.

4. Procédé suivant l'une quelconque des revendications 1 à 3, dans lequel la surface (2, 2', 2'') en amont ménage une distance de déplacement maximum, qui est la distance de déplacement la plus grande disponible, dans lequel la distance de déplacement est la longueur de la projection de la surface (2, 2', 2") en amont dans des sections transversales suivant la direction d'écoulement sur un axe passant par le milieu de l'unité (1) de filtration dans le sens d'écoulement,
dans lequel au moins 20 % de la surface (2, 2', 2'') en amont ménage une distance de déplacement d'au moins 50 % de la distance de déplacement maximum en relation avec le point situé le plus en amont de la surface (2, 2', 2") en amont.

5. Procédé suivant l'une quelconque des revendications 1 à 4, dans lequel la surface (2, 2', 2'') en amont ménage une distance de déplacement maximum étant la distance de déplacement la plus grande disponible, dans lequel la distance de déplacement est la longueur de la projection de la surface (2, 2', 2") en amont dans des sections transversales suivant la direction d'écoulement sur un axe passant par le milieu de l'unité (1) de filtration dans le sens d'écoulement,
dans lequel au moins 15 % de la surface (2, 2', 2") en amont ménage une distance de déplacement d'au plus 40 % de la distance de déplacement maximum en relation avec le point situé le plus en amont de la surface (2, 2', 2") en amont.

6. Procédé suivant l'une quelconque des revendications 1 à 5, dans lequel la surface (2, 2', 2'') en amont a la forme d'un cône ou d'un falbala.

7. Procédé suivant l'une quelconque des revendications 1 à 6, dans lequel la au moins une nervure (5, 5'') de renfort donne une épaisseur d'au moins 0,1 mm.

8. Procédé suivant l'une quelconque des revendications 1 à 7, dans lequel l'unité (1) de filtration donne une cavité intérieure contenant la partie (3, 3") de tamisage et étant propre à permettre l'écoulement du courant de fluide dans l'unité (1) de filtration,
dans lequel la cavité intérieure ménage une épaisseur inhomogène dans la zone de la partie (3, 3") de tamisage.

9. Procédé suivant l'une des revendications 1 à 8, dans lequel la partie (3, 3'') de tamisage ménage au moins une cavité pour permettre au fluide de passer à travers la partie (3, 3'') de tamisage du côté en amont ou du côté en aval,
dans lequel la au moins une cavité ménage des ouvertures sur le côté en amont et le côté en aval de la partie (3, 3") de tamisage, dans lequel au moins 90 % des ouvertures du côté en aval sont plus grandes que les ouvertures reliées du côté en amont.

10. Procédé suivant l'une quelconque des revendications 1 à 9, dans lequel la partie (3, 3'') de tamisage donne la forme d'un plan déformé, dans lequel le plan déformé est **caractérisé par** des indentations (7) dans la direction en aval, dans lequel les indentations (7) sont disposées autour d'un point (6, 6'') central du plan déformé placé au milieu du plan déformé et placé à l'extrémité en amont du plan déformé.
